# EUROPEAN PATENT APPLICATION

(11) **EP 4 760 657 A1**
(43) Date of publication of application: **17.06.2026**
(21) Application number: 24833172.0
(22) Date of filing: 30.10.2024
(51) Int. Cl.: G06V 20/59

(54) **DRIVING STATE IDENTIFICATION METHOD AND APPARATUS, AND DEVICE AND PROGRAM PRODUCT**

(71) Applicant: Streamax Technology Co., Ltd., Shenzhen, Guangdong 518000 (CN)
(72) Inventor: The designation of the inventor has not yet been filed
(74) Representative: Cabinet Netter
(86) International application number: PCT/CN2024/128512
(87) International publication number: WO 2026/090913

(57) **Abstract**

The present application relates to the field of intelligent driving, and in particular to a method and a device for recognizing a driving state, a piece of equipment and a program product. The method includes steps of: collecting a first event of a vehicle during a driving process, where the first event includes a first event attribute and a first event entity used as a node in a graph; adding the first event entity of the first event to a first entity sequence in the graph according to the first event attribute, determining a first relationship label between the first event and the first entity sequence, where the graph includes the first entity sequence determined by an event set before the first event, and the first entity sequence characterizes a relationship between two adjacent event entities in the first entity sequence through a second relationship label; and updating a second relationship label of the first entity sequence according to the first relationship label, and recognizing the driving state according to the first relationship label and the second relationship label. The second relationship label in the first entity sequence is updated according to the first relationship label, which is conducive to improving the accuracy of the recognized driving state.

## Description

### TECHNICAL FIELD

The present application relates to the field of intelligent driving technology, more particularly to a method and a device for recognizing a driving state, a piece of equipment and a program product.

### BACKGROUND

Driving state recognition refers to the use of various sensors and algorithms to monitor and analyze the driver's behavior, physiological status and environmental factors related to driving to determine whether the driver is in a safe driving state. Including recognizing whether the driver is tired, distracted, drunk or in other conditions that may affect the driver's driving ability. Driving state recognition is an important part of the intelligent driving system, which helps to improve road safety and reduce traffic accidents.

In current intelligent driving systems, the driving states are typically recognized based on a single event or events that occur over a period of time. When determining the driving state through a single event, the driver's behavior and physiological status may have certain randomness and individual differences, such as an emergency deceleration which does not necessarily mean that the driver is in a dangerous driving state, it may be the driver's behavioral habits. Events that occur over a period of time may also be the driver's personalized habits, which is not conducive to improving the accuracy of driving state recognition.

### SUMMARY

### TECHNICAL PROBLEM

In view of this, embodiments of the present application provide a method and a device for recognizing a driving state, a piece of equipment and a program product to solve the problem in the existing technology which is not conducive to improving the recognition accuracy of the driving state when recognizing the driving state.

### TECHNICAL SOLUTIONS

In accordance with a first aspect of the embodiments of the present application, a method for recognizing a driving state, the method includes steps of:
collecting a first event of a vehicle during a driving process, where the first event includes a first event attribute and a first event entity used as a node in a graph;
adding the first event entity of the first event to a first entity sequence in the graph according to the first event attribute, and determining a first relationship label between the first event and the first entity sequence, where the graph includes the first entity sequence determined by an event set before the first event, the first entity sequence characterizes a relationship between two adjacent event entities in the first entity sequence through a second relationship label; and
updating the second relationship label of the first entity sequence according to the first relationship label, and recognizing the driving state according to the first relationship label and the second relationship label.

In combination with the first aspect, in a first possible implementation of the first aspect, the step of determining the first relationship label between the first event and the first entity sequence in the graph includes:
determining a second event associated with the first event in the first entity sequence;
determining a conditional event based on the first event and the event set in the first entity sequence, and obtaining probabilities of a relationship between the first event and the second event being different relationship labels based on the conditional event; and
determining the first relationship label between the first event and the second event based on the probabilities.

In combination with the first possible implementation of the first aspect, in a second possible implementation of the first aspect, the step of obtaining the probabilities of the relationship between the first event and the second event being different relationship labels based on the conditional event includes:
determining, according to historical statistical data, the probabilities of the relationship between the first event and the second event being different relationship labels obtained based on the conditional event; or
alternatively, inputting the first event and the first entity sequence into a probability prediction model that has been trained in advance to determine the probabilities of the relationship between the first event and the second event being different relationship labels.

In combination with the first aspect, in a third possible implementation of the first aspect, the step of determining, according to historical statistical data, the probabilities of the relationship between the first event and the second event being different relationship labels obtained based on the conditional event includes:
determining, according to a knowledge graph determined by the historical statistical data of a fleet, the probabilities of the relationship between the first event and the second event being different relationship labels obtained based on the conditional event, in case that a length of time that a driver of the vehicle has joined a fleet system is greater than a predetermined length of time; and
determining, according to a knowledge graph determined by the historical statistical data of the driver, the probabilities of the relationship between the first event and the second event being different relationship labels obtained based on the conditional event, in case that the length of time that the driver of the vehicle has joined the fleet system is smaller than or equal to the predetermined length of time.

In combination with the first possible implementation of the first aspect, in a fourth possible implementation of the first aspect, before the step of adding the first event entity of the first event to the first entity sequence in the graph according to the first event attribute, the method further includes a step of:
determining a connection order of each entity in the first entity sequence according to an event end time in the first event attribute.

In combination with the first aspect, in a fifth possible implementation of the first aspect, the step of collecting the first event of the vehicle during the driving process includes at least one of the following:
obtaining an action event of a driver of the vehicle through a driver monitoring system;
obtaining an environmental event of the vehicle during the driving process through an advanced driver assistance system; and
obtaining a motion event of the vehicle through a motion sensor of the vehicle.

In combination with the fifth possible implementation of the first aspect, in the sixth possible implementation of the first aspect, the action event includes at least one of an eye closing event, a yawning event, a left and right observation event, a head-down distraction event, a downward glance distraction event, a phone call event, a smoking event, an eating event, a drinking event, and a driver's large-scale movement event;
the environmental event includes at least one of a front collision event, a vehicle-to-vehicle distance event, a pedestrian collision event, a lane departure event, and a lane keeping abnormality event; and
the motion event includes at least one of an acceleration event, a smooth deceleration event, a sharp deceleration event, a smooth deceleration event, a sharp turn event, a smooth turn event, a collision event, and a rollover event.

In accordance with a second aspect of the embodiments of the present application, a device for recognizing a driving state is provided, and the device includes:
an event collection unit, configured to collect a first event of a vehicle during a driving, the first event comprising a first event attribute and a first event entity used as a node in a graph;
a relationship label determination unit, configured to add the first event entity of the first event to a first entity sequence in the graph according to the first event attribute, and determine a first relationship label between the first event and the first entity sequence, the graph comprising the first entity sequence determined by an event set before the first event, the first entity sequence characterizing a relationship between two adjacent event entities in the first entity sequence through a second relationship label; and
a driving state determination unit, configured to update a second relationship label of the first entity sequence according to the first relationship label, and recognize the driving state according to the first relationship label and the second relationship label.

In accordance with a third aspect of the embodiments of the present application a piece of electronic equipment is provided, which includes a memory, a processor, and a computer program stored in the memory and executable by the processor. The processor, when executing the computer program, causes the electronic equipment to implement any one of the methods in the first aspect.

In accordance with a fourth aspect of the embodiments of the present application, a computer program product is provided. The computer program product, when running on a computer, causes the computer to execute the method in the first aspect or in any of the implementations of the first aspect.

In accordance with a fifth aspect of the embodiments of the present application, a computer-readable storage medium is provided. The computer-readable storage medium stores a computer program. The computer program, when executed by a processor, causes the steps of any one of the methods in the first aspect to be implemented.

In accordance with a sixth aspect of the embodiments of the present application, a chip is provided for implementing the method in each implementation of the first aspect. Particularly, the chip includes: a processor for invoking and executing the computer program from a memory, so that a piece of equipment equipped with the chip is enabled to implement the method in the first aspect or in any of the various implementations of the first aspect.

### BENEFICAL EFFECTS

Compared with the existing technologies, the embodiments of the present application have the following beneficial effects: in the embodiments of the present application, when the first event during the driving process is collected, the first event entity of the first event is added to the first entity sequence in a predetermined graph according to the first event attribute of the first event, the first relationship label between the first event and the first entity sequence is determined, the second relationship label of the first entity sequence is updated according to the first relationship label, and the driving state is recognized according to the first relationship label and the second relationship label. Since the method can update the second relationship label of the first entity sequence according to the first relationship label between the latest generated first event and the previously-generated first entity sequence, the second relationship label has a higher accuracy, so that the driving state recognized according to the first relationship label and the updated second relationship label will be more accurate, and by means of the knowledge graph searching, the recognition efficiency of the driving state can be effectively improved.

### DESCRIPTION OF THE DRAWINGS

To illustrate the technical solutions in the embodiments of the present application more clearly, the drawings required to be used in the description of embodiments or the existing technologies will be briefly introduced below. Obviously, the drawings described below are only some embodiments of the present application. For ordinary technicians in this field, other drawings may be obtained based on these drawings without exerting creative efforts.
FIG. 1 is a schematic diagram of an implementation scenario of a method for recognizing a driving state provided in an embodiment of the present application;
FIG. 2 is a schematic diagram of an implementation flow of a method for recognizing a driving state provided in an embodiment of the present application;
FIG. 3 is a schematic diagram of an implementation flow of determining a relationship label provided in an embodiment of the present application;
FIG. 4 is a schematic diagram of an entity sequence of determining a first relationship label based on a first entity sequence and a first event provided in an embodiment of the present application;
FIG. 5 is a schematic diagram of updating a second relationship label according to the first relationship label provided in an embodiment of the present application;
FIG. 6 is a schematic diagram of an entity sequence of determining a first relationship label based on a first entity sequence and a first event provided in an embodiment of the present application;
FIG. 7 is a schematic diagram of updating a second relationship label according to the first relationship label provided in an embodiment of the present application;
FIG. 8 is a schematic diagram of a device for recognizing a driving state provided in an embodiment of the present application; and
FIG. 9 is a schematic diagram of a piece of electronic equipment provided in an embodiment of the present application.

### DETAILED DESCRIPTION OF THE EMBODIMENTS

In the following description, for the purpose of explanation rather than limitation, specific details such as specific system structures and technologies are proposed to provide a thorough understanding of the embodiments of the present application. However, it should be clear to persons skilled in the art that the present application may also be implemented in other embodiments without these specific details. In other cases, detailed descriptions of well-known systems, devices, circuits and methods are omitted to avoid unnecessary details that hinder the description of the present application.

To illustrate the technical solutions of the present application, the following is an explanation through specific embodiments.

The driving state recognition technology deploys multiple sensors and uses algorithms to monitor the driver's behavior patterns, physiological reactions, and the driving environment the driver is in in real time, so as to assess whether the driver is in a condition suitable for safe driving. This technology can recognize whether the driver is showing fatigue, inattention, driving under the influence of alcohol or other conditions that may impair his driving skills. As a key component of the intelligent driving system, driving state recognition technology plays a vital role in enhancing road safety and reducing the incidence of accidents.

In current intelligent driving systems, the recognizing driving state is often achieved by analyzing a single event or several events over a period of time. However, judging the driving state based only on a single event may be affected by the randomness and individual differences of the driver's behavior and physiological reactions. For example, an emergency deceleration operation does not always mean that the driver is in a dangerous state, which may be part of his personal driving habits. Similarly, several events over a period of time may also reflect the driver's personal driving habits, which may pose a challenge to improving the accuracy of driving state recognition.

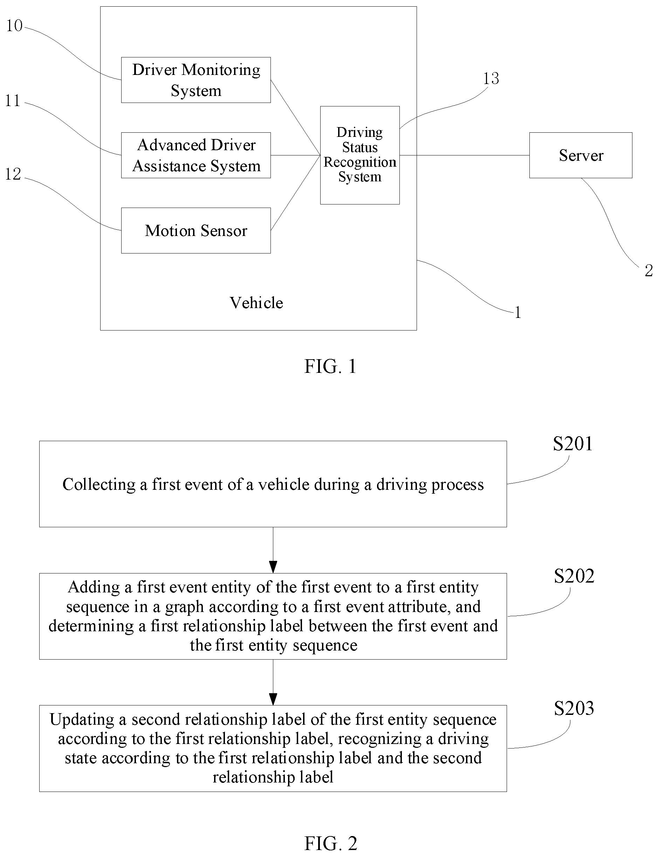

FIG. 1 is a schematic diagram of an implementation scenario of a method for recognizing a driving state provided in an embodiment of the present application. As shown in FIG. 1, the implementation scenario includes a vehicle 1 and a server 2. The vehicle 1 includes a driver monitoring system (the English abbreviation is DMS, and the English full name is Driver Monitoring System) 10, an advanced driver assistance system 11 (the English abbreviation is ADAS, and the English full name is Advanced Driver Assistance System), a motion sensor 12 and a driving state recognition system 13. Among them, the driver monitoring system 10 may collect relevant information of a driver of the vehicle through a DMS camera, and determine an action event of the driver of the vehicle. The action event includes at least one of an eye closing event, a yawning event, a left and right observation event, a head-down distraction event, a downward glance distraction event, a phone call event, a smoking event, an eating event, a drinking event and a driver's large-scale movement event. The advanced driver assistance system 11 may collect an environmental event during a vehicle driving process through an ADAS camera, and the environmental event includes at least one of a front collision event, a vehicle-to-vehicle distance event, a pedestrian collision event, a lane departure event, and a lane keeping abnormality event. The motion sensor 12 may be used to collect motion information of the vehicle and determine a motion event of the vehicle. The motion event includes at least one of an acceleration event, a smooth deceleration event, a sharp deceleration event, a smooth deceleration, a sharp turn event, a smooth turn event, a collision event and a rollover event. The vehicle or server may generate a graph including an entity sequence based on the collected events and the attributes of the events, and characterize a relationship between two adjacent events in the entity sequence through relationship labels.

For any newly-collected first event, a knowledge graph may be constructed and updated by means of the driving state recognition system 13 or the service 2. A first relationship label between a first event and a first entity sequence may be determined according to the knowledge graph, a second relationship label of the first entity sequence previously obtained may be updated according to the first relationship label, and a driving state may be recognized based on the first relationship label and the second relationship label. By looking up the entity sequence, the calculation burden of a vehicle terminal can be effectively reduced.

FIG. 2 is a schematic diagram of an implementation flow of a method for recognizing a driving state provided in an embodiment of the present application, which is described in detail as follows:

In step S201, a first event of a vehicle during a driving process is collected.

The first event includes a first event entity and a first event attribute. The first event entity is used as a node in the graph. For any event, an event entity and an event attribute may be included. When an event entity is used as a node in the graph, the name of the event entity may be used as the name of the node. For example, the name of the event entity may be determined based on the event' name. The event entity' name may include at least one of an eye closing entity, a yawning entity, a left and right observation entity, a head-down distraction entity, a downward glance distraction entity, a phone call entity, a smoking entity, an eating entity, a drinking entity, a front collision entity, a vehicle-to-vehicle distance entity, a pedestrian collision entity, a lane departure entity, a lane keeping abnormality entity, a sharp acceleration entity, a sharp deceleration entity, a sharp turn entity, a collision entity and a rollover entity.

When collecting the first event, image data may be collected through a DMS camera or an ADAS camera included by the vehicle, or motion data of the vehicle may be collected through a motion sensor, and then an event in the driving process and an event attribute of the event are determined based on the collected image data or motion data.

Herein, driver image data of a driver of the vehicle during the driving process may be collected through the DMS camera, and the driver's action event may be determined based on the collected driver image data. The determined action event may include at least one of a driver's eye closing event, a yawning event, a left and right observation event, a head-down distraction event, a downward glance distraction event, a phone call event, a smoking event, an eating event, a drinking event, and a driver's large-scale movement event.

The environmental event of the vehicle during the driving process may be determined through the image data of the vehicle's surrounding environment collected by the ADAS camera. The determined environmental event may include at least one of a front collision event, a vehicle-to-vehicle distance event, a pedestrian collision event, a lane departure event, and a lane keeping abnormality event.

The motion data of the vehicle is collected by the motion sensor (including a motion state detection device such as an acceleration sensor or a gyroscope), and the motion event of the vehicle is determined according to the motion data of the vehicle. The motion event of the vehicle may include at least one of an acceleration event, a smooth deceleration event, a sharp deceleration event, a smooth deceleration event, a sharp turn event, a smooth turn event, a collision event, and a rollover event.

The attribute of any event may include one or more items of information such as the start time of the event, the end time of the event, the speed at the start of the event, the speed at the end of the event, the driving time at the start of the event, and the vehicle position at the start of the event.

When determining the event attribute, it may be determined whether the event is a valid event in combination with a duration of the detected state. For example, an operation procedure, when detecting the eye closing event, may include:
1. When it is detected that any one of the eyes is closed, the timing is started.
2. After the timing is started, if both eyes are detected to be in a non-closed state and a duration of the non-closed state is greater than a first duration, such as greater than a duration of 2 frames (i.e., it is detected that two consecutive frames are closed eye images. The duration of 2 frames is related to a frame rate. After the frame rate is determined, a frame interval duration can be determined according to the frame rate, and the number of frame intervals can be determined according to the number of frames. The actual duration corresponding to a specific frame duration can be determined according to the number of frame intervals, and the first duration may be set as needed), then the timing of this event is ended.
3. If a duration of eye closing is smaller than a second duration, such as smaller than 200 ms (which may be adjusted as needed), the event of this timing is invalid and discarded.
4. If both eyes are detected to be in the non-closed state and the duration is smaller than the first duration, such as smaller than 2 frames (which may be set as needed), and also the driver is detected to be in a closed-eye state, then it is considered that the current closed-eye event is not over.
5. After the last eye closing event is ended, if a left eye or a right eye is detected to be in the closed state again, then the timing is started again. If the left eye and the right eye are detected to be in the non-closed state and the duration of the non-closed state is greater than the first duration, such as greater than 2 frames (that is settable) or more, then the timing is ended, and an end moment of the timing is determined as the timing end time.
6. If both eyes are detected to be in the closed state, the timing is started. If both eyes are detected to be in the non-closed state (both eyes of the driver are open) and the duration of the non-closed state is greater than the first duration, such as greater than 2 frames (which may be set as needed) or more, then the timing is ended and a duration of both eye being closed is calculated.

In step S202, a first event entity of the first event is added to a first entity sequence in a graph according to a first event attribute, and a first relationship label between the first event and the first entity sequence is determined.

Herein, the graph includes the first entity sequence determined by an event set before the first event, and the first entity sequence characterizes a relationship between two adjacent event entities in the first entity sequence through the second relationship label.

The first entity sequence is determined based on the events collected during the driving process of the vehicle, and the wording "first" is used to distinguish other entity sequences. In general, whether the first entity sequence in the graph is in the same entity sequence may be determined based on the time interval of the events. For example, an end time of the first event is a first moment, an end time of a second event is a second moment, and if a time interval between the first moment and the second moment is greater than a predetermined third duration, such as greater than 100 s, then it may be determined that the first event entity and the second event entity belong to different entity sequences. For the subsequent event entity, a new entity sequence may be created to recognize the driving state.

In a possible implementation, the event entities in the first entity sequence may also be dynamically updated according to a preset number of event entities. For example, when a new first event is detected, the newly-detected first event entity is added to the first entity sequence, and the event entity in the first entity sequence that is farthest from the end time of the first event is deleted, so that the set number of event entities is dynamically maintained in the first entity sequence.

Herein, when more than two events are included in the entity sequence (including the first entity sequence), a connection relationship between the entity sequences may be determined according to the end time of the event. That is, according to the end time of the event, one or two events associated with the end time may be found. For example, the event set in the event sequence includes a first event, a second event and a third event. The corresponding end times of these events are t1, t2 and t3 respectively. The corresponding event entities are a first event entity, a second event entity and a third event entity respectively. If the time t1 is earlier than the time t3, and the time t3 is earlier than the time t2, then a connection sequence of these event entities is the first event entity, the third event entity and the second event entity.

In an embodiment of the present application, the relationship between the event entities in the graph is characterized by relationship labels. Relationship labels may include the vehicle being hijacked, the driver's severe fatigue, the driver's severe fatigue leading to abnormal behavior, the driver's severe distraction, the driver's mild fatigue, the driver's mild distraction, the driver's fierce driving, the driver's conservative driving, the driver's stable driving, the driver following the vehicle too close, the driver's personalized habits, the driver's abnormal operation, the driver's normal behavior, and other relationship labels.

In an embodiment of the present application, when adding the first event to the first entity sequence in the graph, if the vehicle is cold started and the first entity sequence is empty, then the first event may be directly used as the first node of the first entity sequence in the graph, in this case, it is not required to determine the relationship label between the first event and the first entity sequence. Or alternatively, the time interval between the first event and the end time of the previous event is too long, the first entity sequence and the first event entity belong to different entity sequences, and a determination of the relationship label between the first event and the first entity sequence may not be required.

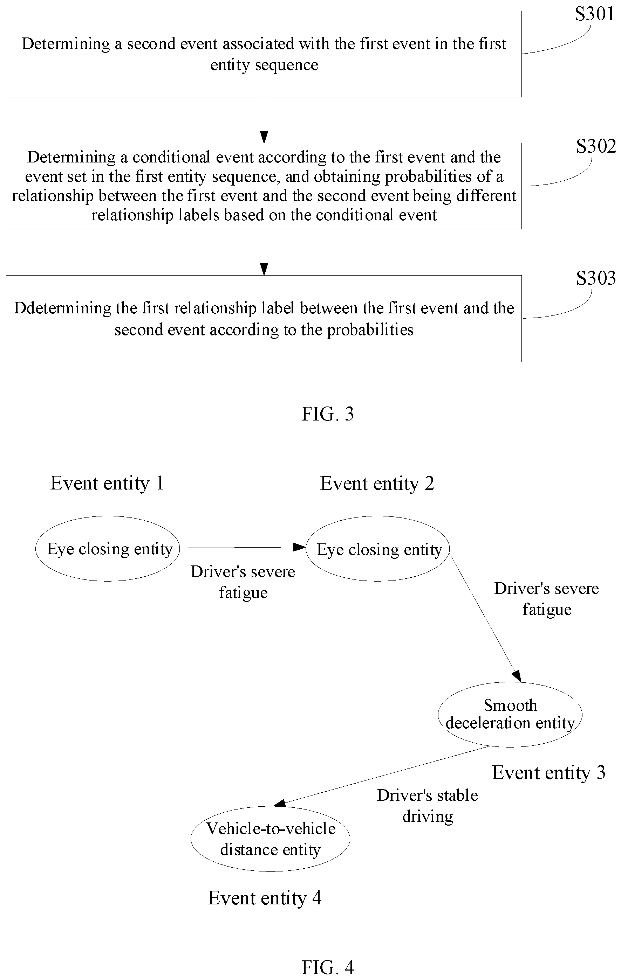

In case that the first entity sequence is not empty, and the duration between the end time of the first event and the end time of the second event in the first entity sequence (i.e., the last event in the first entity sequence) is smaller than a third duration, then the association between the first event entity and the second event entity may be established, and the first relationship label between the first event and the first entity sequence is determined, which may be specifically shown in FIG. 3, including steps S301, S302 and S303:

In step S301, a second event associated with the first event in the first entity sequence is determined.

In general, the second event that is associated with the first event in the first entity sequence is the event corresponding to the event entity at the end of the first entity sequence. The end time of the second event is usually before the end time of the first event.

In step S302, a conditional event is determined according to the first event and an event set in the first entity sequence, and based on the conditional event, probabilities of a relationship between the first event and the second event being different relationship labels are obtained.

When determining the relationship between the first event and the second event, it is required to determine the number in the event set in the first entity sequence.

In case that the event entity in the first entity sequence is 1, the second event and the first event may be directly used as the conditional events. Based on the second event, the probabilities of the relationship between the first event and the second event being different relationship labels are obtained, and the probabilities of all relationship labels are on the conditional event may be calculated.

When the number of event entities in the first entity sequence is greater than 1, an event set of more than two events may be determined based on the first entity sequence, and the conditional event may be determined based on the first event and the event set. The probabilities of generating different relationship labels are determined based on the conditional event.

Herein, when determining the first relationship label between the first event and the second event according to the conditional event, the probabilities of the current conditional event with respect to different relationship labels may be found according to a knowledge graph determined by historical statistical data of the driver, or the first event and the first entity sequence may be input into a probability prediction model that has been trained in advance to determine the probabilities of the relationship between the first event and the second event being different relationship labels, and the association relationship between the first event and the second event is determined by selecting the relationship label with the maximum probability.

When determining the probabilities of different relationship labels according to the historical statistical data, if the driver has joined a fleet system for less than a predetermined duration, such as smaller than 1 year, the number of historical statistical data of the driver is relatively small, to improve the accuracy of the historical statistical data, the probabilities of different relationship labels based on the conditional event may be determined according to the knowledge graph determined by the historical statistical data of the fleet.

If the driver has joined the fleet for more than or equal to the predetermined duration, the knowledge graph determined by the historical statistical data of the driver may be directly used to determine the probabilities of different relationship labels based on the event condition.

In step S303, the first relationship label between the first event and the second event is determined according to the probabilities.

After the first relationship label between the second event and the first event is determined, in the embodiment of the present application, the second relationship label between the events in the first entity sequence is updated according to the first relationship label. The second relationship label may include one relationship label or more than two relationship labels.

In step S203, a second relationship label of the first entity sequence is updated according to the first relationship label, and the driving state is recognized according to the first relationship label and the second relationship label.

Since the first relationship label between the first event entity and the second event entity corresponding to the first event and the second event is newly determined, the second relationship label between individual event entities in the first entity sequence can be updated according to the first relationship label, so that the second relationship label between the individual event entities in the first entity sequence is more accurate. Based on the accurate first relationship label and the second relationship label, the driving state of the driver may be recognized according to a preset label relationship, a corresponding relationship between the entity sequence and the driving state, or the driving state of the driver may be recognized based on the trained driving state recognition model.

After the relationship labels between the first event and the second event are determined, the second event may be updated to the first entity sequence to obtain an updated first entity sequence.

The entity sequence of the first relationship label is determined Based on the first entity sequence and the first event, which may be shown in FIG. 4. The first entity sequence in the graph includes an event entity 1, an event entity 2 and an event entity 3, which are respectively an eye closing entity 1, an eye closing entity 2 and a balanced deceleration entity 3. The first event detected is an event entity 4, and an entity name of the event entity 4 is a vehicle-to-vehicle distance entity. The event attributes of these events are introduced as follows:

A1, at 12.00.10 the eye closing entity 1 is generated whose event attribute has a start time of 12.00.00 and an end time of 12.00.10, and the duration of this entity is 10 s.

A2, at 12.00.20 the eye closing entity 2 is generated whose event attribute has a start time of 12.00.15 and an end time of 12.00.20, and the duration of this entity is 5 s. Based on a logical relationship (which may be determined by historical statistical information or based on the relationship label prediction model), it may be determined that the relationship label between entity 1 and entity 2 is that the driver is severely fatigued.

A3, at 12.00.23 the smooth deceleration entity 3 is generated whose event attribute has a start time of 12.00.18 and an end time of 12.00.28. The duration of this entity is 10 s, the speed is reduced from 40 km/h to 0 km/h, and the deceleration is 1.1m/s^2. According to the logical sequence association of the current event entity 1, event entity 2, and event entity 3, the relationship between event entity 2 and event entity 3 is still that the driver is severely fatigued.

A4, at 12.00.25 the vehicle-to-vehicle distance entity 4 is generated whose event attribute has a start time of 12.00.20 and an end time of 12.00.30. According to the conditional event of event entity 1, event entity 2, event entity 3, and event entity 4, the logical relationship between event entity 3 and event entity 4 is determined. It thus can be seen that this behavior sequence is caused by the normal action of the driver, rather than the driver's severe fatigue, so the relationship between event entity 3 and event entity 4 is determined to be the driver's stable driving.

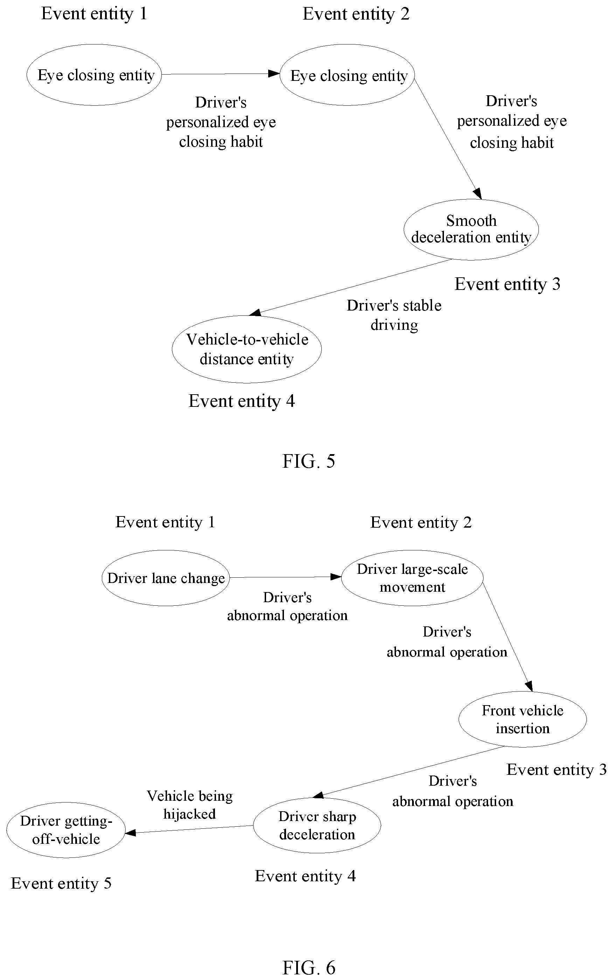

Due to the relationship labels of event entity 3 and event entity 4 may be determined according to the pre-statistical correspondence, or according to the driving state recognition model that has been trained in advance, it may be determined that the relationship label of event entity 2 and event entity 3 is the driver's personalized eye closing habit, and the relationship label of entity 1 and entity 2 is also the driver's personalized eye closing. In this case, the knowledge graph may be shown in FIG. 5.

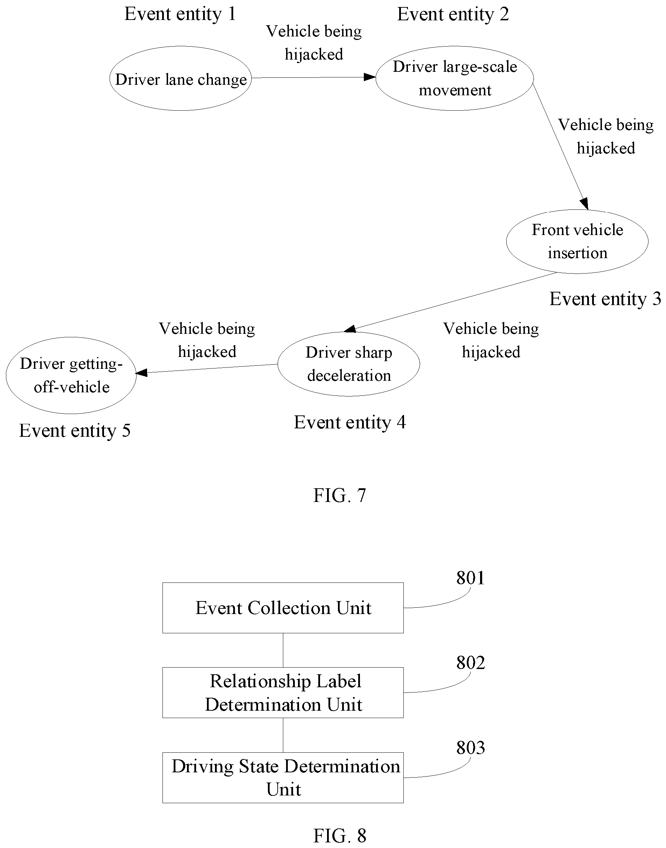

In another embodiment, as shown in FIG. 6:
B1, at 12.00.05 a driver lane change entity (event entity 1) is generated, whose event attribute includes a lane change start time of 12.00.02, a lane change start speed of 70 km/h, a lane change end time of 12.00.05 and a lane change end speed of 80 km/h.
B2, at 12.00.08, a driver large-scale movement entity (event entity 2) is generated, whose event attribute includes a start time of 12.00.00, a start speed of 60 km/h, an end time of 12.00.08 and an end speed of 85 km/h. Based on the logical relationship between event entity 1 and event entity 2, it may be inferred that the relationship label between the event entity 1 and the event entity 2 is caused by an abnormal operation of the driver.
B3, at 12.00.20, a front vehicle insertion entity (event entity 3) is generated, whose event attribute includes a start time of 12.00.18 and an end time of 12.00.20. Based on the logical relationship between event entity 1, event entity 2 and event entity 3, it is predicted that the relationship label in this case is an abnormal operation of the driver.
B4, at 12.00.22 a driver sharp deceleration entity (event entity 4) is generated, whose event attribute includes a start time of 12.00.17, an end time of 12.00.22, and a deceleration of 23.6m/s^2. Due to the logical relationship between event entity 1, event entity 2, event entity 3 and event entity 4, it may be inferred that the relationship label between event entity 3 and event entity 4 is an abnormal operation of the driver.
B5, at 12.00.30 a driver getting-off-vehicle entity (event entity 5), whose event attribute includes a start time of 12.00.30 and an end time of 12.00.30. Based on the logical dependency of event entity 1, event entity 2, event entity 3, event entity 4, and event entity 5 (calculating the probabilities of the relationship labels by taking event entities 1-5 as conditional events), it may be inferred that the relationship label between event entity 5 and event entity 4 is that the vehicle is hijacked. At this time, the knowledge graph composed of event entity 1 to event entity 5 is shown in FIG. 6.
B6, from the graph link relationship of event entity 1, event entity 2, event entity 3, event entity 4 and event entity 5, it can be seen that the relationship label between event entity 4 and event entity 3 is the vehicle being hijacked, the relationship label between event entity 2 and event entity 3 is the vehicle being hijacked, and the relationship label between event entity 1 and event entity 2 is the vehicle being hijacked. At this time, the knowledge graph composed of event entity 1 to event entity 5 with the second relationship label being updated is shown in FIG. 7.

From the above two examples, it can be seen that the second relationship label in the first entity sequence is updated by the new first relationship label, and the driver's driving state can be determined more accurately by the updated first relationship label and the second relationship label.

In addition, in the embodiments of the present application, an entity sequence is constructed through a knowledge graph, and an entity sequence for complex events is constructed through a triple of event entities, event attributes and relationship labels, which is conducive to rapid retrieval and query of relevant information, without the need for tedious event search in massive data.

The scattered risk events can be associated through the entity sequence, and the complete risk process can be traced back through the association of adjacent event entity pairs, which helps to obtain sufficient information to complete risk recognition.

After the knowledge graph is constructed, the construction and confirmation of new relationship labels can be quickly completed based on the constructed knowledge graph.

Through the calculation of the relationship labels and reorganization of the driving state on the server side, the terminal side only needs to realize event collection, which can greatly reduce the complexity of the equipment side and reduce equipment costs.

It should be understood that the sequence number of each step in the above embodiment does not mean the order of execution. The execution order of each process should be determined by its function and internal logic, and should not constitute any limitation on the implementation process of the embodiments of the present application.

FIG. 8 is a schematic diagram of a device for recognizing a driving state provided by an embodiment of the present application, the device includes: an event collection unit 801, a relationship label determination unit 802 and a driving state determination unit 803.

The event collection unit 801 is configured to collect a first event of a vehicle during a driving process. The first event includes a first event attribute and a first event entity used as a node in a graph.

The relationship label determination unit 802 is configured to add the first event entity of the first event to a first entity sequence in the graph according to the first event attribute, and determine a first relationship label between the first event and the first entity sequence. The graph includes the first entity sequence determined by an event set before the first event, the first entity sequence characterizes a relationship between two adjacent event entities in the first entity sequence through a second relationship label.

The driving state determination unit 803 is configured to update the second relationship label of the first entity sequence according to the first relationship label, and recognize the driving state according to the first relationship label and the second relationship label.

The device for recognizing the driving state shown in FIG. 8 corresponds to the method for recognizing the driving state shown in FIG. 2.

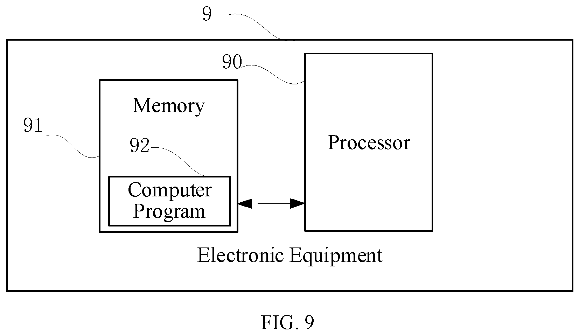

FIG. 9 is a schematic diagram of a piece of electronic equipment provided by an embodiment of the present application. As shown in FIG. 9, the electronic equipment 9 of this embodiment includes: a processor 90, a memory 91, and a computer program 92 stored in the memory 91 and executable by the processor 90, such as a driving state recognition program. The processor 90, when executing the computer program 92, is configured to implement the steps in the above-mentioned method embodiments for recognizing the driving state. Alternatively, the processor 90, when executing the computer program 92, causes the functions of each module/unit in the above-mentioned device embodiments to be implemented.

Exemplarily, the computer program 92 may be divided into one or more modules/units, one or more modules/units are stored in the memory 91, and are executed by the processor 90 to complete the present application. One or more modules/units may be a series of computer program instruction segments that can complete specific functions, and the instruction segments are used to describe the execution process of the computer program 92 in the electronic equipment 9.

The electronic equipment 9 may be a computing device such as a desktop computer, a notebook, a PDA, and a cloud server. The electronic equipment may include, but is not limited to, a processor 90 and a memory 91. Persons skilled in the art can understand that FIG. 9 is only an example of the electronic equipment 9 which does not constitute a limitation on the electronic equipment 9. More or fewer components than shown in the figure may be included, or some components may be combined or different components may be included. For example, the electronic equipment may also include input and output devices, network access devices, buses, etc.

The processor 90 may be a central processing unit (Central Processing Unit, CPU), and may also be other general-purpose processors, a digital signal processor (Digital Signal Processor, DSP), an application specific integrated circuit (Application Specific Integrated Circuit, ASIC), a field-programmable gate array (Field-Programmable Gate Array, FPGA) or other programmable logic devices, discrete gate or transistor logic devices, discrete hardware components, etc. The general-purpose processor may be a microprocessor or the processor may be any conventional processor, etc.

The memory 91 may be an internal storage unit of the electronic equipment 9, such as a hard disk or a memory of the electronic equipment 9. The memory 91 may also be an external storage device of the electronic equipment 9, such as a plug-in hard disk, a smart media card (Smart Media Card, SMC), a secure digital (Secure Digital, SD) card, a flash card (Flash Card), etc. equipped on the electronic equipment 9. Further, the memory 91 may also include both an internal storage unit of the electronic equipment 9 and an external storage device. The memory 91 is used to store computer programs and other programs and data required by the electronic equipment. The memory 91 may also be used to temporarily store data that has been output or is to be output.

The technicians in the relevant field can clearly understand that for the convenience and simplicity of description, only the division of the above-mentioned functional units and modules is used as an example. In practical applications, the above-mentioned function allocation may be completed by different functional units and modules based on actual needs, that is, the internal structure of the device is divided into different functional units or modules to complete all or part of the functions described above. The functional units and modules in the embodiment may be integrated in one processing unit, or various units may exist physically separately, or two or more units may be integrated in one unit. The above-mentioned integrated unit may be implemented in the form of hardware or in the form of software functional units. In addition, the specific names of the functional units and modules are only for the convenience of distinguishing each other and are not used to limit the protection scope of the present application. For specific working processes of the units and modules in the above system, references may be made to the corresponding process in the above method embodiment, which will not be repeated here.

In the above embodiments, the description of each embodiment has its own emphasis. For parts that are not described or recorded in detail in a certain embodiment, references may be made to the relevant description of other embodiments.

Persons of ordinary skill in the art can realize that the units and algorithm steps of each example described in combination with the embodiments disclosed in the present application may be implemented in electronic hardware, or a combination of computer software and electronic hardware. Whether these functions are executed in hardware or software depends on the specific application and design constraints of the technical solution. Professional and technical personnel may use different methods to implement the described functions for each specific application, but such implementations should not be considered to be beyond the scope of the present application.

In the embodiments provided in the present application, it should be understood that the disclosed device/terminal equipment and method may be implemented in other ways. For example, the device/terminal equipment embodiments described above are only schematic. For example, the division of modules or units is only a logical function division. There may be other division methods in actual implementation, such as multiple units or components may be combined or integrated into another system, or some features may be ignored or not executed. Another point is that the mutual coupling or direct coupling or communication connection shown or discussed may be an indirect coupling or communication connection through some interfaces, devices or units, which may be electrical, mechanical or in other forms.

The units described as separate components may or may not be physically separated, and the components shown as units may or may not be physical units, that is, these units/components may be located in one place, or may be distributed on multiple network units. Some or all of the units may be selected according to actual needs to achieve the purpose of the embodiment.

In addition, the functional units in the various embodiments of the present application may be integrated into a processing unit, or each unit may exist physically separately, or two or more units may be integrated into one unit. The above-mentioned integrated units may be implemented in the form of hardware or in the form of software functional units.

The integrated module/unit, if implemented in the form of a software functional unit and sold or used as an independent product, may be stored in a computer-readable storage medium. Based on this understanding, the implementations of all or part of the processes in the above-mentioned embodiment method of the present application may also be completed by hardware related to computer program instructions. The computer program may be stored in a computer-readable storage medium. When the computer program is executed by the processor, the steps of each of the above-mentioned method embodiments can be implemented. Among them, the computer program includes computer program code, and the computer program code may be in source code form, object code form, executable file or some intermediate forms. The computer-readable medium may include: any entity or device that can carry computer program code, a recording medium, a USB flash drive, a mobile hard disk, a disk, an optical disk, a computer memory, a read-only memory (Read-Only Memory, ROM), a random-access memory (Random Access Memory, RAM), an electric carrier signal, a telecommunication signal and a software distribution medium. It should be noted that the content contained in the computer-readable medium may be appropriately increased or decreased according to the requirements of legislation and patent practice in the jurisdiction. For example, in some jurisdictions, according to legislation and patent practice, the computer-readable medium does not include electric carrier signal and telecommunication signal.

In addition, an embodiment of the present application also provides a computer program product, which, when running on a computer, enables the computer to execute the methods in the above-mentioned implementations.

The above-described embodiments are intended only to illustrate the technical solutions of the present application, rather than limiting the present application. Although the present application has been described in detail with reference to the foregoing embodiments, it should be understood by persons of ordinary skill in the art that the technical solutions described in the above-mentioned embodiments may still be modified, or some of the technical features in these embodiments are equivalently substituted. These modifications or substitutions do not cause the essence of the corresponding technical solutions to deviate from the spirit and scope of the technical solutions in the embodiments of the present application, and thus should all be included within the protection scope of the present application.

## Claims

1. A method for recognizing a driving state, **characterized by** the method comprising:
collecting a first event of a vehicle during a driving process, the first event comprising a first event attribute and a first event entity used as a node in a graph;
adding the first event entity of the first event to a first entity sequence in the graph according to the first event attribute, and determining a first relationship label between the first event and the first entity sequence, the graph comprising the first entity sequence determined by an event set before the first event, the first entity sequence characterizing a relationship between two adjacent event entities in the first entity sequence through a second relationship label; and
updating the second relationship label of the first entity sequence according to the first relationship label, recognizing the driving state according to the first relationship label and the second relationship label.

2. The method according to claim 1, **characterized in that**, said determining the first relationship label between the first event and the first entity sequence in the graph comprises:
determining a second event associated with the first event in the first entity sequence;
determining a conditional event according to the first event and the event set in the first entity sequence, and obtaining probabilities of a relationship between the first event and the second event being different relationship labels based on the conditional event; and
determining the first relationship label between the first event and the second event according to the probabilities.

3. The method according to claim 2, **characterized in that**, said obtaining the probabilities of the relationship between the first event and the second event being different relationship labels based on the conditional event comprises:
determining, according to historical statistical data, the probabilities of the relationship between the first event and the second event being different relationship labels obtained based on the conditional event; or alternatively,
inputting the first event and the first entity sequence into a probability prediction model that has been trained in advance to determine the probabilities of the relationship between the first event and the second event being different relationship labels.

4. The method according to claim 1, **characterized in that**, said determining, according to historical statistical data, the probabilities of the relationship between the first event and the second event being different relationship labels obtained based on the conditional event comprises:
determining, according to a knowledge graph determined by the historical statistical data of a fleet, the probabilities of the relationship between the first event and the second event being different relationship labels obtained based on the conditional event, in case that a length of time that a driver of the vehicle has joined a fleet system is greater than a predetermined length of time; and
determining, according to a knowledge graph determined by the historical statistical data of the driver, the probabilities of the relationship between the first event and the second event being different relationship labels obtained based on the conditional event, in case that the length of time that the driver of the vehicle has joined the fleet system is smaller than or equal to the predetermined length of time.

5. The method according to claim 1, **characterized in that**, before said adding the first event entity of the first event to the first entity sequence in the graph according to the first event attribute, the method further comprises:
determining a connection order of each entity in the first entity sequence according to an event end time in the first event attribute.

6. The method according to claim 1, **characterized in that**, said collecting the first event of the vehicle during the driving process comprises at least one of the following:
obtaining an action event of a driver of the vehicle through a driver monitoring system;
obtaining an environmental event of the vehicle during the driving process through an advanced driver assistance system; and
obtaining a motion event of the vehicle through a motion sensor of the vehicle.

7. The method according to claim 6, **characterized in that**, the action event comprises at least one of an eye closing event, a yawning event, a left and right observation event, a head-down distraction event, a downward glance distraction event, a phone call event, a smoking event, an eating event, a drinking event, and a driver's large-scale movement event;
the environmental event comprises at least one of a front collision event, a vehicle-to-vehicle distance event, a pedestrian collision event, a lane departure event, and a lane keeping abnormality event; and
the motion event comprises at least one of an acceleration event, a smooth deceleration event, a sharp deceleration event, a smooth deceleration event, a sharp turn event, a smooth turn event, a collision event, and a rollover event.

8. A device for recognizing a driving state, **characterized by** the device comprising
an event collection unit, configured to collect a first event of a vehicle during a driving, the first event comprising a first event attribute and a first event entity used as a node in a graph;
a relationship label determination unit, configured to add the first event entity of the first event to a first entity sequence in the graph according to the first event attribute, and determine a first relationship label between the first event and the first entity sequence, the graph comprising the first entity sequence determined by an event set before the first event, the first entity sequence characterizing a relationship between two adjacent event entities in the first entity sequence through a second relationship label; and
a driving state determination unit, configured to update a second relationship label of the first entity sequence according to the first relationship label, and recognize the driving state according to the first relationship label and the second relationship label.

9. Electronic equipment, comprising a memory, a processor, and a computer program stored in the memory and executable by the processor, **characterized in that** the processor, when executing the computer program, causes the electronic equipment to implement the method as claimed in any one of claims 1 to 7.

10. A computer program product, comprising a computer program instruction, **characterized in that** the computer program, when being executed, causes the method as claimed in any one of claims 1 to 7 to be implemented.
